# EUROPEAN PATENT APPLICATION

(11) **EP 3 790 135 A1**
(43) Date of publication of application: **10.03.2021**
(21) Application number: 20194070.7
(22) Date of filing: 02.09.2020
(51) Int. Cl.: H02G 3/08, H02G 3/14, H02G 3/12

(54) **A WALL MOUNT FOR AN ELECTRICAL DEVICE**

(30) Priority: 03.09.2019 GB 201912613
(71) Applicant: German Town Gas Limited, Kwai Chung N.T. (HK)
(72) Inventor: Ho Chi Hung, Terence, Kwai Chung (HK); Kwok Tu, Chun, Kwai Chung (HK)
(74) Representative: Walker, Neville Daniel Alan

(57) **Abstract**

A wall-mount for providing access to the end of a cable hidden into a wall. The wall-mount comprises a housing, into which the cable in the wall extends. The ends of the cable can be fitted with an electrical device such as a switch, a power socket, or an electrical appliance.

The housing is provided with a cover having an orifice. The cover can be screwed or snap-fit onto the housing. The electrical device which is connected to the cable inside the housing can be snap-fit into the orifice on the cover.

## Description

### Field of Invention

The present invention relates to wall-mounted electrical devices, in particular wall mounted power sockets and switches.

### Background of the invention

It is a trend for people living in apartments or concrete houses to bury power cables in a room within its cement walls to provide an aesthetically pleasing look. The cables are typically connected to a power supply at one end, and to sockets to supply power into the room at the other end. Alternatively, the other end of the cables may be connected to a switch to allow people to operate electrical appliances which are on the cable circuit. Hence, an end of an otherwise buried cable is normally exposed for handling by emerging from a cavity made into the room wall. To avoid crumbling bits of plaster and to avoid dust interfering with electrical connections, the cavity is normally fitted with a plastic housing lining the cement surface of the cavity to provide a clean cable handling environment.

The housing typically has an open mouth. The base of the housing is inserted into the cavity such that the mouth faces away from a room wall. The size of the housing is such that the housing virtually fills up the cavity completely. The sides of housing have one or more perforations through which the cable may extend into the housing. Hence, an electrician is able to handle the cable by reaching through the mouth of the housing. The socket or switch to which the cable connects is provided on a cover which, when secured to the housing, caps the mouth.

The c over is typically secured directly to the housing by screws. Often, after plastering, paintwork or other decorative finishes have been completed around the cover during room renovation, unexpected re-wiring, or electric re-installation requires access to the cable within the housing. This requires unscrewing the cover from the housing. Such unexpected electric work often damage the fine finishing around the housing. Also, unscrewing the cover and replacing it over the housing is tedious and time consuming.

### Prior Art

JP 2013110803 (MIRAI Industries) describes a wiring accessory installation body that assists drawing of cables from an existing wiring accessory installation. The wiring accessory installation body includes a frame body formed in a square frame shape. The frame body includes: fixing parts detachably formed thereon for fixing a wiring accessory; and attachment parts into which fixing members for attaching the frame body onto a wall surface are inserted.

US 2017/0116483 (Richardson) discloses a control device assembly including a detector apparatus configured to generate an image. The detector apparatus includes a controller configured to detect occupants based on the image generated by the detector, wherein the controller is configured to determine an active state of the detected occupants, the activity state including at least one of a stationary state or moving state.

US20130277086 (Rohmer) discloses an electrical wiring system having a frame assembly that includes a frame opening at a central portion thereof. The frame opening provides access to the interior of a wall box device. At least one electrical wiring device is configured to snap into the frame opening such that the interior of the wall box device is completely enclosed by the frame assembly and the at least one electrical wiring device such that access to wiring disposed within the device wall box is inhibited.

EP-A-1 156 568 (Ensto Busch Jaeger) discloses a junction box for electric cables for use in electric cable installations in buildings. A wire connection box has four walls and a base integrally formed therewith. In the base of the box are located lugs which can be moved or turned between a fastening position, protruding from the outer edge of the base, and a storage position.

An object of the invention is to provide a device and a method of installing a wall-mounted electrical installation without damaging finishing around power sockets or switches.

Another aim is to is to provide a device and a method of installing a wall-mounted electrical installation quickly and which enables easy access to cable ends in the from within a wall.

### Summary of the invention

A wall-mount for an electrical device, comprising a housing suitable for installation into a wall; a housing having a cover; the cover having an orifice suitable for positioning of a removable electrical device; an outer plate which is laid over the cover; the outer plate having an orifice; the cover having a guide to align the outer plate such that the orifice of the cover is aligned with the orifice of the outer plate; a gap is provided between the outer plate and the cover into which a part of the electrical device is inserted to be held by the outer plate and the cover, wherein the cover comprises a part for a snap-fit assembly, the part for the snap-fit assembly is interlocked with another part of the snap-fit assembly upon removable of the electrical device.

The electrical device can be a switch, a socket or an electrical appliance, which may be attached to the orifice in the cover place and be connected to cables extending from a wall into the housing.

'Positioning' into the orifice of the outer plate include both the possibilities of the electrical device located into the orifice without being affixed to the cover, and the electrical device located into the orifice by being secured directly to the cover by mechanical means such as a snap-fit connection or a screw.

By snap-fit in this specification, it is taken to include an interference fit, which the skilled man would understand comprises a part on a device is temporarily deformed to receive and accommodate a corresponding part of another device.

Preferably, the cover is secured to the housing by way of an interference fit.

Preferably, the interference fit comprises an eye (or eyelet) on the one part; and a plug on the other part; the plus being deformable to be pushed into the eye or eyelet to secure the plug therein.

Preferably, the cover is secured to the housing by way of one or more screws.

Preferably, the housing is defined by a base and at least one side-wall around the base; the at least one side-wall having at least one portion defined by a weakened edge; the weakened edge being breakable to remove the at least one portion from the side-wall to provide access for a cable to be threaded through the side-wall.

Preferably, the wall-mount for an electrical device further comprises an outer plate laid over the cover; the outer plate having an orifice; the cover having a guide to align the outer plate such that the orifice of the cover is aligned to the orifice of the outer plate.

Preferably, a gap is provided between the outer plate and the cover into which a part of the electrical device can be inserted to be held by the outer plate and the cover.

In a further aspect, the invention proposes a cover suitable for assembly with the housing of the wall-mount for an electrical device.

In this aspect, the cover may be provided and sold separately, as an item that may fit into a housing of any configuration, including conventional, existing designs. This has the advantage of allowing existing housings already installed in walls to be used with an easily removable cover, in place of the original screw-fastened cover of such housings. For example, covers can be configured to fit to housings already installed into the walls of apartments using back boxes already embedded in the wall, for example in Hong Kong or the United Kingdom.

In a further aspect, the invention proposes an outer plate suitable for assembly with the housing of the wall-mount for an electrical device.

In a further aspect, the invention proposes an electrical device having a part of a snap-fit assembly, the part of a snap-fit assembly being suitable for snap-fitting to a counterpart of the snap-fit assembly on a cover of a wall-mount for an electrical device.

This aspect allows the electrical device to be provided and sold separately, as an item that may fit to the cover of a housing, allowing easy replacement of the electrical device. This also provides a possibility to increase the number of merchants and manufacturers who are keen to make electrical devices suitable for fitting to the cover. Hence, the cover on the housing provides a standard which these manufacturers can adhere to, so that more products can be designed and made for the same housing cover, and so that consumer can enjoy more products which can easily fit into the housing covers installed in their homes. Such an electrical device may be manufactured by different businesses and yet be dimensioned to snap fit to the same orifice on cover on a housing.

Preferably, the electrical device is selected from the following: a switch, a power socket or an electrical appliance

It will be convenient to further describe the present invention with respect to the drawings that illustrate possible arrangements of the invention, in which like integers refer to like parts.

Other arrangements of the invention are possible, and consequently the particularity of the accompanying drawings is not to be understood as superseding the generality of the preceding description of the invention.

### Brief description of the Figures

Figure 1 shows an embodiment of the invention;
Figure 1A shows devices which may be used in the embodiment of Figure 1;
Figure 1B shows an enlarged part of the drawing in Figure 1 in isolation;
Figure 1C is an exploded view of part of Figure 1;
Figure 1D is an exploded view of a variation of the part shown in Figure 1C;
Figure 2A is the perspective view the invention of Figure 1C;
Figure 2B is a top view corresponding to Figure 2A;
Figure 2C, 2D, 2E, 2F and 2G are variations of the embodiment of Fi. 1C;
Figure 2H shows some photographs of some of prior art;
Figure 3A and Figure 3B show the embodiment of Figure 1C without any electrical device;
Figure 3C shows the details of the plug of a cover in the embodiment of Fig 3A;
Figure 3D shows the perspective view of the housing and cover snapped together;
Figure 4A and Figure 4B show the embodiment of Figure 3A with an outer plate installed;
Figure 4C and 4D shows the cross sectional views of Figure 4A;
Figure 4E shows an electric device connected to cable inside the embodiment of Figure 4A; and
Figure 5A, 5B, 5C and 5D show embodiments of the present invention each installed different electrical devices.

Detailed description of preferred embodiments will now be described with reference to the Figures.

### Detailed description of embodiments

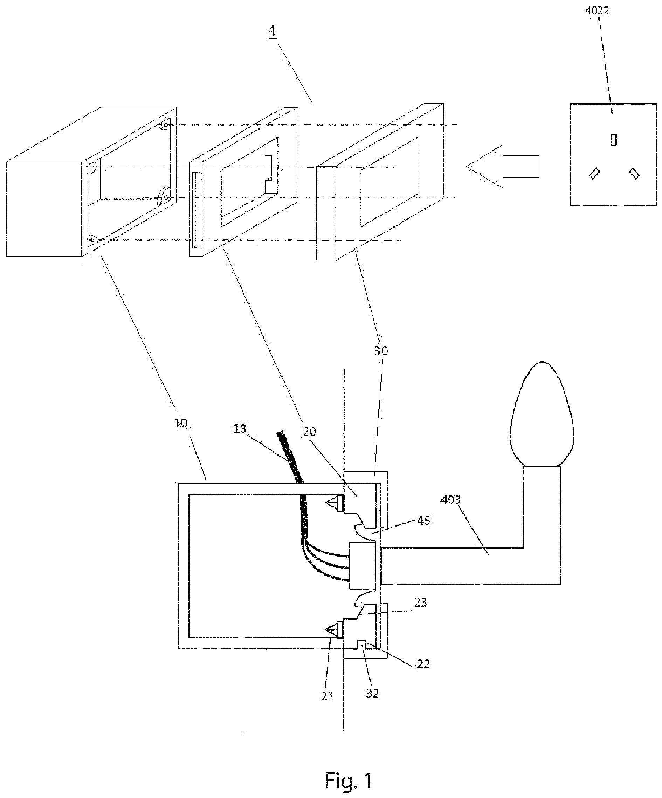

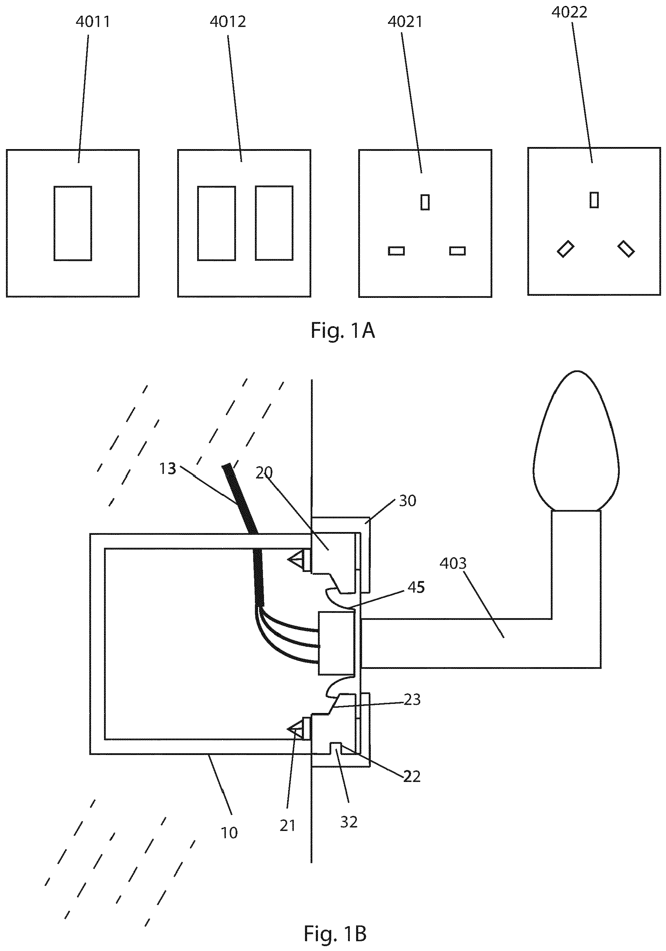

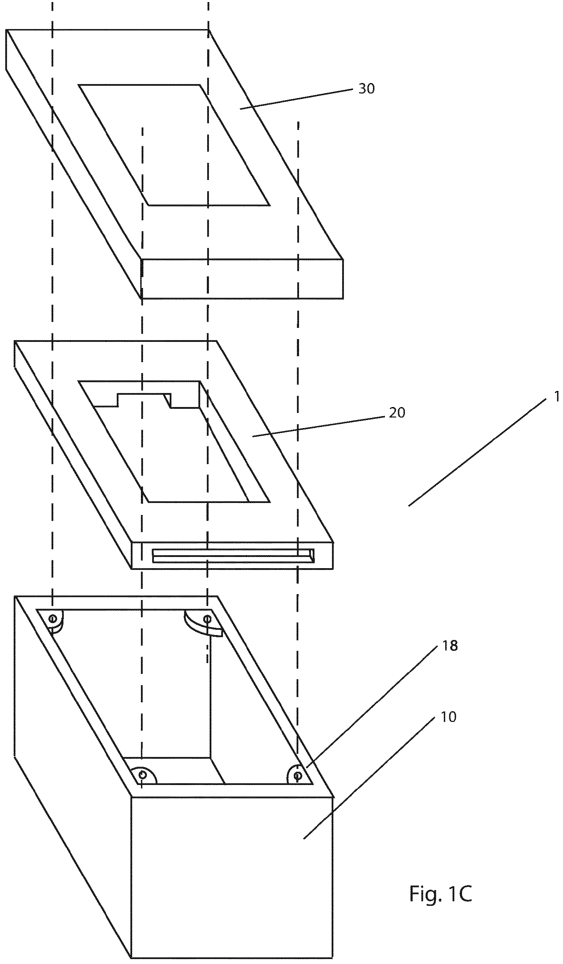

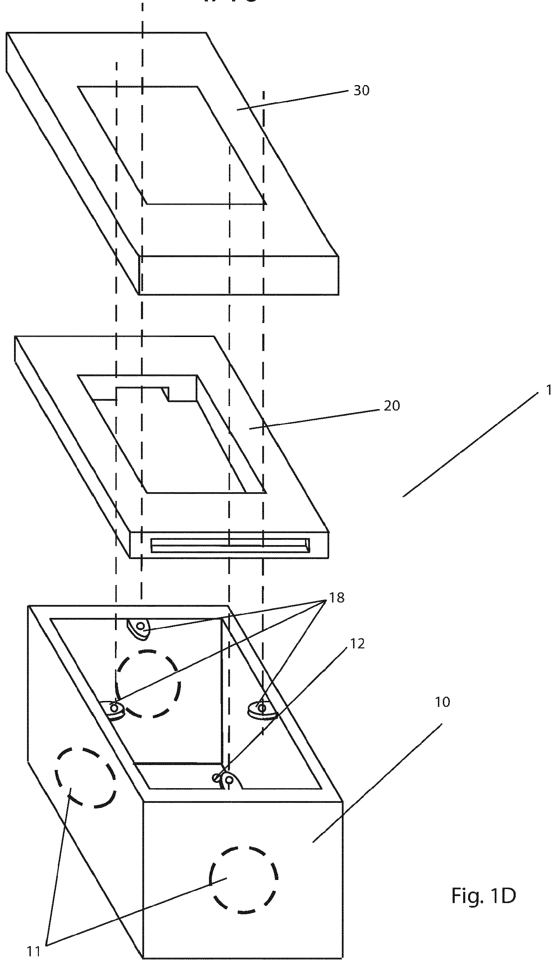

Figures 1A to 1D show a first embodiment 1 of the invention. The embodiment 1 is comprises a housing 10, a cover 20 and an outer plate 30. The housing 10 comprises a base of whose perimeter is surrounded by side walls, defining a mouth. When the embodiment 1 is fully assembled, the mouth of the housing 10 is capped by the cover 20, and the cover 20 is in turn laid over by the outer plate 30 to provide an aesthetic finish. Figure 1C is an exploded view of the embodiment 1 of Figure 1, showing how the outer plate 30 fits onto the cover 20, and the cover 20 in turn fits onto the housing 10. Accordingly, the cover 20 is has a similar shape to the mouth of the housing 10.

Typically, the base of the housing 10 is a square or a rectangular shape. Alternatively, the base of the housing 10 may be circular in shape and the housing 10 is thus cylindrical in such a case (not illustrated).

The base of the housing 10 is configured to be inserted into a cavity in a room wall, such that cables buried in the wall can emerge from the wall and extend into the housing 10. The ends of the cables inside the housing may then be accessible by an electrician.

Both the cover 20 and the outer plate 30 are each provided with an orifice in its centre. In Figure 1, orifices of the cover 20 and the outer plate 30 are both rectangular. The orifice in the outer plate 30 is aligned with the orifice in the cover 20 when they are assembled with the housing 10.

The housing 10 is typically be made of a suitable material such as metal, plastic or other hard material. Similarly, the cover 20 and the outer plate 30 are typically made of a hard insulating material, such as synthetic plastics material.

The electrical device 403 may be a power socket for supplying electricity into a room, a switch to control an electric circuit to which the cable is connected, or an electrical appliance, such as a lamp, that fits into the outer plate 30. In Figure 1, the electrical device 403 is an electrical lamp in the shape of a candle which has an L-shaped arm.

Figure 1A shows the front view of different types of power sockets 4201, 4022 and switches 4011, 4012, which are examples of other electrical devices 403.

In Figure 1C, eyelets 18 are shown provided in the corners of the mouth of the housing 10. The eyelets 18 are able to receive plugs 21 (not visible in Figure 1C) which are placed in corresponding positions on the underside of the cover 20. Each pair of corresponding plug 21 and eyelet 18 can be pushed together into a snap-fit or interference fit. In this way, the cover 20 can be easily aligned and secured to the housing 10.

Figure 1D shows a variation of the embodiment 1 of Figure 1C, in which the eyelets 18 are provided in the mid-point of each of the four sides of the mouth of the housing 10. The eyelets in Figure 1D are placed according to the standards required for cable housings in Hong Kong and the United Kingdom. It is appreciated that the dimensions of housings may vary for different countries and these may be obtained easily by the skilled reader from sources elsewhere and are not provided herein.

The cover 20 in Figure 1D can be made to comply with the existing cable housings already used in the homes of Hong Kong. In this way, the cable housings do not need to be replaced but a consumer, such as a home owner may nevertheless enjoy the benefits brought about by the embodiment 1, simply by replacing the original housing cover with the cover 20 of the embodiment 1. The orifice in the cover 20 of the embodiment 1 overcomes the problem of the original covers not providing easy access to cables in the housing.

The outer plate 30 is typically secured over the cover 20 for aesthetic purposes. As mentioned, there is an orifice in the centre of the outer plate 30 which allows the base of the electrical device 403 to pass through the outer plate 30 and to be secured to the cover 20. Hence, when the housing 10, cover 20 and outer plate 30 are assembled, the orifice in the centre of the cover 20 are all in register one with another so that they all align with the orifice in the centre of the outer plate 30.

As shown in Figure 1, the orifice in the cover 20 can be fitted with an electrical device 403. The end of the L-shaped arm of the electric candle has base plate. The base plate has two clamps 45 which extend in opposition directions. Each clamp 45 fits onto and cooperates with the respective edge of the orifice of the cover 20. After the electric candle has been installed into the orifice of the cover 20 in this way, the outer plate 30 can be placed over the candle to be moved into position over cover 20.

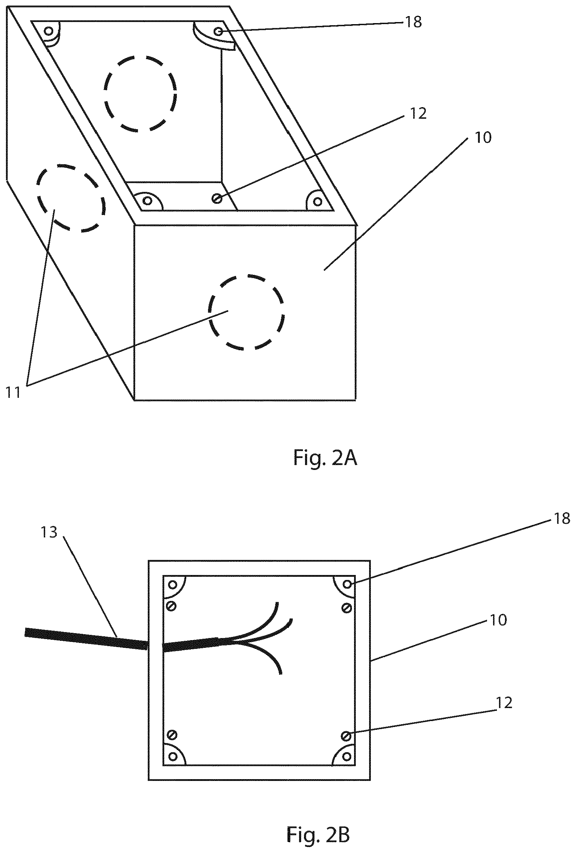

Figure 2A to Figure 2G show alternative embodiments of the housing 10 in isolation. Figure 2A is a perspective view of a housing 10, while Figure 2B is the corresponding view from above. In Figure 2B, cables can be seen extending into the centre of the housing 10. The side walls of the housing 10 are provided with one or more removable plates 11. The plates are defined by a weakened edge, allowing the plates to break away from the side wall when pushed hard. In some embodiments, there are two removable plates 11 in each side wall of the housing 10. According to the direction of the cable 13 in the room wall, one or more of these plates 11 may be selectively removed to allow a cable 13 emerging from the room wall, to extend into the housing 10. Figure 2B shows a power cable 13 inserted into the housing 10 through the perforation created by removing a plate 11.

There are one or more screw holes on the base of the housing 10 that allow screws 12 to fix the embodiment 1 into the cavity in the room wall.

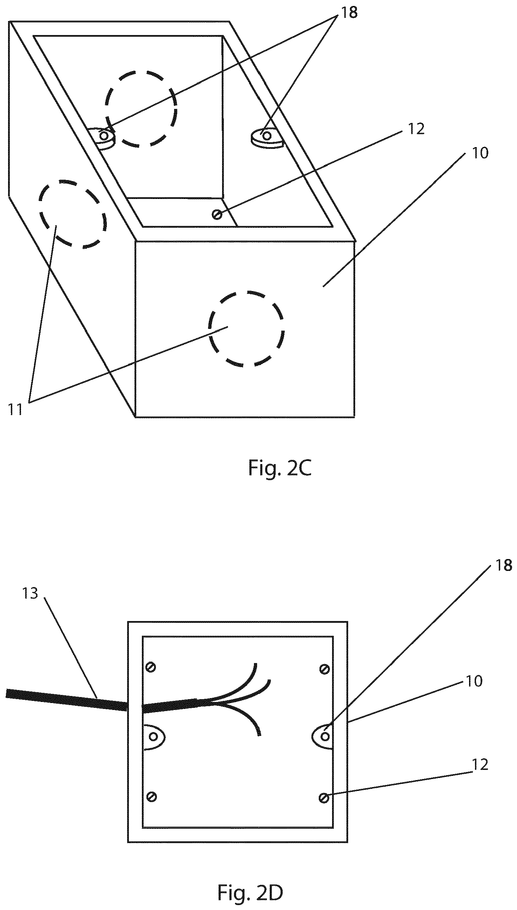

Figure 2C is a perspective view of a variation of the housing 10, and Figure 2D is the corresponding top view. In Figure 2A, eyelets 18 are provided at the corners of the mouth of the housing 10, whereas in the variation shown in Figure 2C, two eyelets 18 are provided on opposing sides of the mouth.

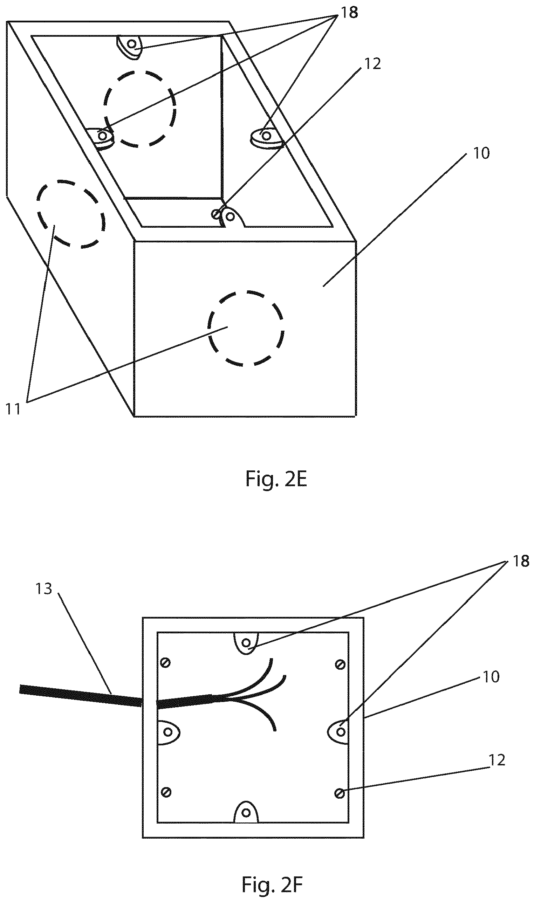

Figure 2E is a perspective view of another variation of the housing 10, and Figure 2F is the corresponding top view, in which an eyelet 18 is provided along each of the four side walls of the rectangular housing 10.

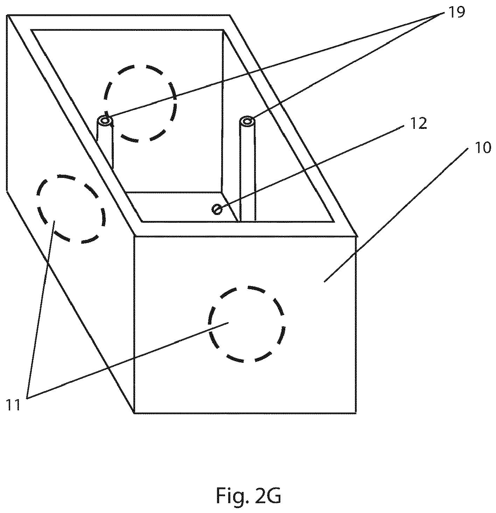

Figure 2G is the perspective view of yet another variation of the housing 10, wherein instead of eyelets 18, screw holes 19 are provided within the housing 10, by which the cover 20 may be secured by screws over the mouth of the housing 10.

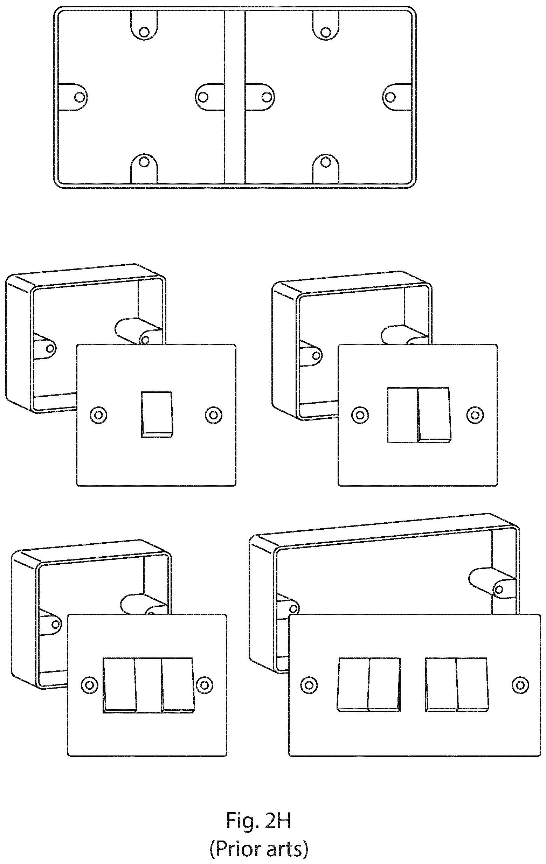

Figure 2H shows examples of prior art cable housing 10. These prior art housings are generally used in many buildings, such as cities and countries like Hong Kong and United Kingdom. Embodiments of the present invention may be adapted to fit to the dimension and shape of these prior art housings, by following the same standards required in the pertinent cities or countries. Variations of the embodiments may be adapted to the standards of such cable housings in the USA or Australia.

For these prior art cable housings, their covers are screwed onto the housings, requiring tedious effort to remove the covers from the housing and to replace them. Hence, if a switch in the prior art is malfunctioning, the switch can only be replaced with some effort. In contrast, the present invention allows the switch, or any device connected to the housing to be easily replaced. Notably, there is no need to remove any screws; instead a straightforward replacement of the switch or electrical device is possible by just pushing and lifting the electrical device out of the cover, after having removed the outer plate.

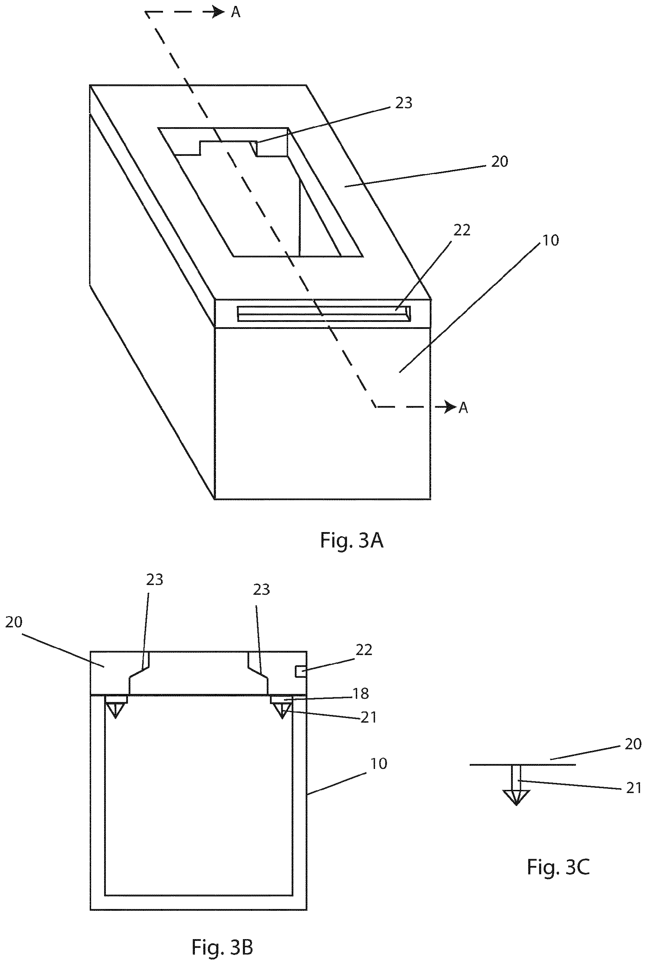

Figure 3A and Figure 3B show the housing 10 capped by the cover 20, without a cover plate 30. Figure 3A shows the perspective view and Figure 3B shows a cross-sectional view along line A-A. Once assembled, the cover 20 cannot be removed from the housing 10 without force. Figure 3C shows a magnified view of an example of an interference fit which may be used to secure the cover 20 to the housing 10. The interference fit shown includes a plug 21 provided on the underside of the cover 20. Typically, the plug 21 comprises an enlarged head attached to a neck. The head is in the shape of a cone. The base of the head sits on the end of the neck, and the tip of the head points away from the neck. The neck is thinner than the base of the head. The head is made from a resiliently deformable material which is able to deform under pressure and revert into its original shape and dimension when pressure is released. At the bottom of cover 20 there is a plurality of these plugs 21 each being located to match to a corresponding eyelet 18 placed atop of housing 10.

Each eyelet 18 is a planar protrusion having a hole at its centre. The head on the plug 21 is intended to be pressed through eyelet 18. However, the hole of the eyelet 18 has a diameter that is slightly smaller than the base of the head (see Figure 3C). The neck of the plug however, is able to fit into the eyelet 18 relatively easily. On being pressed into the eyelet, the head deforms to pass therethrough. Once through the eyelet, the head springs back to its original shape and size. When snapped-on in this way, each set of connectors (plug 21 and eyelet 18) are interlocked, as illustrated in section in Figure 3B. The relatively wide base of the head is not conducive to deformation and so prevents the plug from detaching from the eyelet 18.

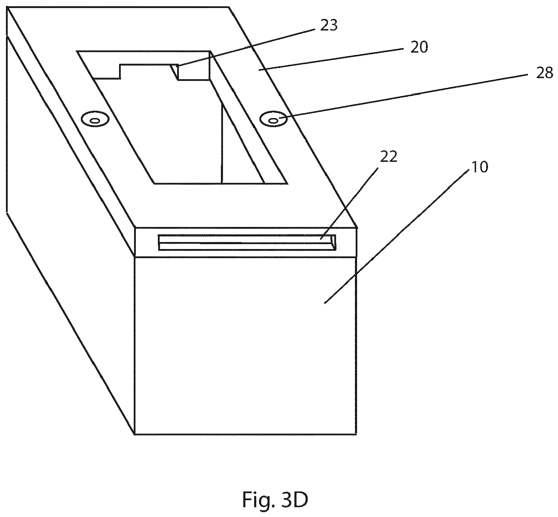

Alternatively, cover 20 can be removably attached to housing 10 by screws instead of the plug and eyelet assembly. In such embodiments, the eyelets 18 are replaced by screw holder 19 that are threaded for receiving screws. Screws may then be used to secure the cover 20 to housing 10. Figure 3D shows the screw holes through which screws may extend through to secure the cover 20 to the housing 10. The screw holes on the case cover are countersunk 28 to give a flushed finish to the installed screws.

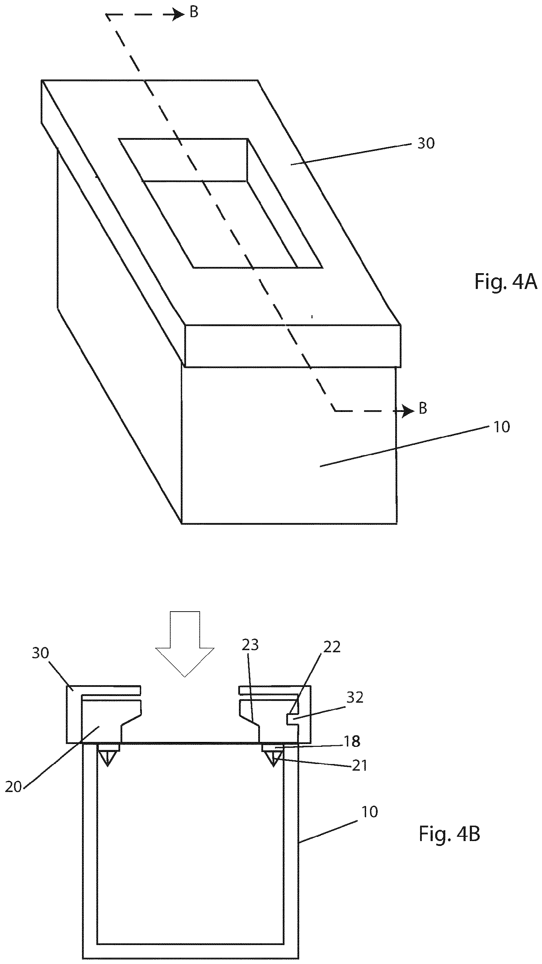

Figure 4A and Figure 4B show the housing 10, cover 20 and outer plate assembled together. Figure 4A is the perspective view of the embodiment 1. In Figure 4A, no electrical device 403 is shown installed into the outer plate 30. As the outer plate 30 is slightly larger in size than the cover 20, the cover 20 is not visible in Figure 4A.

Figure 4B shows a cross-sectional view of the embodiment 1 of Figure 4A, along line B-B. The orifice on the cover 20 and the orifice on the outer plate 30 are both aligned. The electrical device 403 can be snap-fitted onto the cover 20 in the direction of the arrow from above. The cable 13 from within the wall extending into the housing can be connected to the base of the electrical device 403.

The outer plate 30 has a ridge 32 that fits into a corresponding groove 22 on the outer surface of the cover 20. The groove 22 guides the positioning of the outer plate 30 onto the cover 20 to ensure proper alignment, so that the orifice in the centre of the cover 20 and the orifice in the centre of the outer plate 30 are aligned one with another. In Figure 3A, only one groove is shown. However, in a variation of the embodiment 1, the cover 20 may have multiple grooves 22 to receive multiple ridges 32 which may be provided on the outer plate 30. Alternatively, outer plate 30 can be fixed to cover 20 by other means, for example a screw and screw hole (not shown).

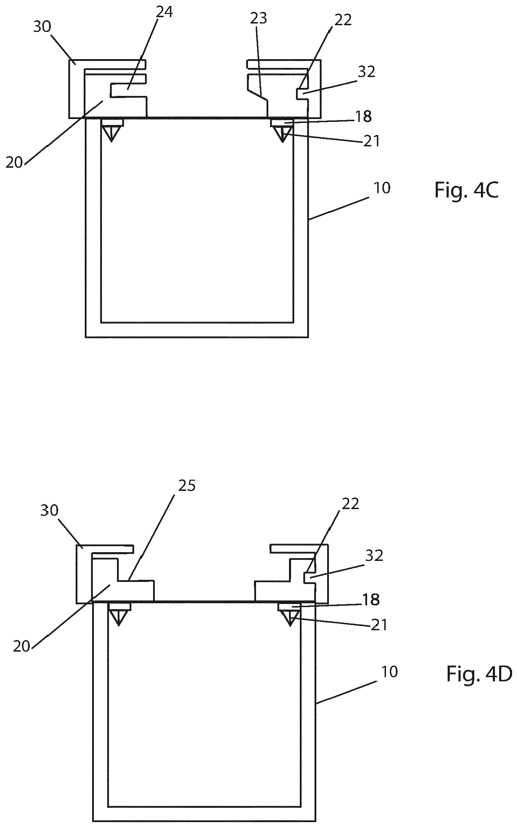

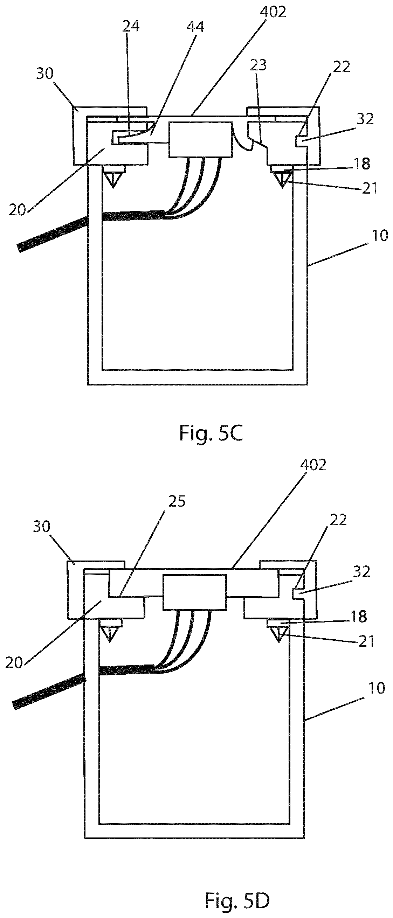

Figure 4C is a variation of Figure 4B and also shows the cross-sectional view along line B-B of a variation of the assembled housing 10, cover 20 and outer plate 30. The cover 20 further has a slot 24 that is adapted to accommodate extended heads 44 (see embodiment of Figure 5C) on the electrical device 403.

Figure 4D shows a variation of Figure 4C in which the cover 20 has a recess 25 on opposites sides of the orifice of cover 20. That is, the edge of the orifice is cut to provide a recess. Alternatively, the recess is made on all four sides of the rectangular orifice of cover 20. The recess 25 is provided as a seat for the electrical device 403 (see Figure 5D).

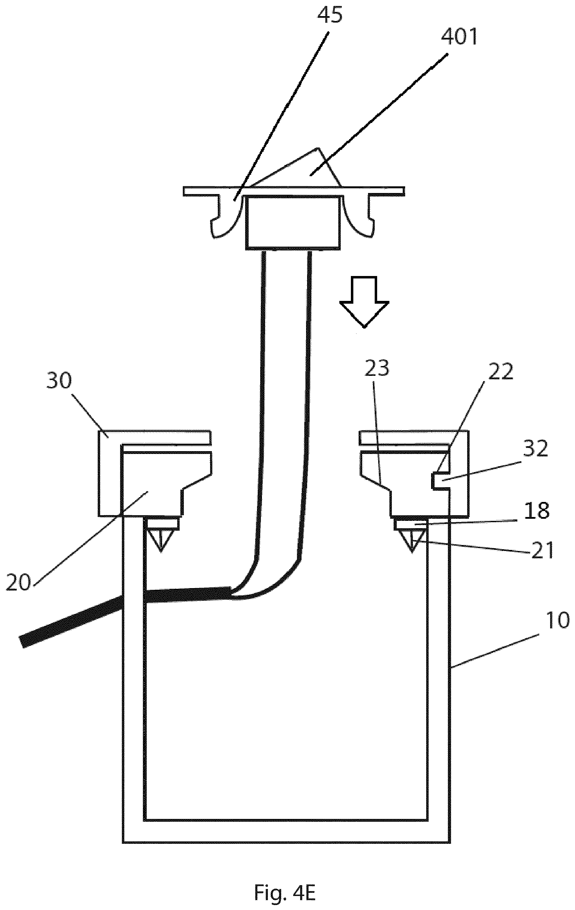

Figure 4E illustrates how the assembled housing 10, cover 20 and outer plate 30 of Figure 4A to Figure 4D may be snap-fit with an electrical device, in the direction of the arrow. The electrical device is connected to cables pulled from within the housing 10.

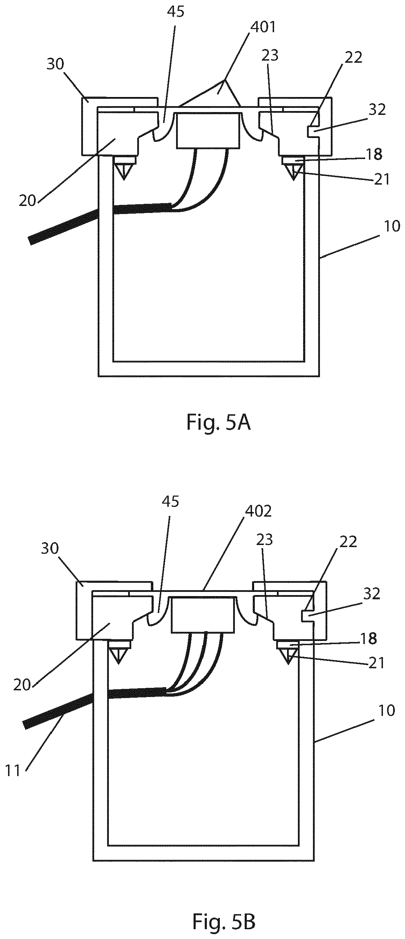

Figure 5A, Figure 5B, Figure 5C and Figure 5D show the cross section of four assembled embodiments, each installed with a different modular electrical device 401,402,403,401

In Figure 5A, the electrical device is an on-off switch 401. Opposite sides of the base of the on-off switch 401 are each provided with a clamp 45. The clamps 45 hold the opposite sides of the orifice in the cover to secure the position of the on-off switch 401.

In Figure 5B, the electrical device is a power socket 402. The power socket has clamps 45 which hold on the edge of the orifice of the cover 20, just like the on-off switch 401 in Figure 5A.

Figure 5C and Figure 5D each shows an exchangeable electrical device 403 installed between cover 20 and outer plate 30. In most embodiments, the outer plate 30 is cosmetic and has no functional usage (see Figure 1C). However, in Figures 5A to Figure 5C, the part of the electrical device 403 which is inserted into the cover 20 has a base plate which is pinched by the cover 20 and the outer plate 30. Hence, besides being held by abutment 23 and clamps 45, the electrical device 403 is held by the gap between the cover 20 and the outer plate 30.

Figure 5D shows one way in which the cover 20 of Figure 4D is used. The recess cut into the edge of the orifice of the cover 20 is used to locate the electrical device 402. The outer plate 30 is placed over the cover 20 such that the electric device 402 is pinched and held by the outer plate 30 and the cover 20.

Therefore, the embodiments described above include a wall-mount for an electrical device 403, the wall-mount comprising a housing 10 suitable for installation into a wall; the housing having a cover 20; the cover 20 having an orifice suitable for positioning of the removable electrical device.

Although the embodiments as described has a cover 20 and outer plate 30, in the simplest embodiment 1, the outer plate 30 may be omitted.

Some embodiments may comprise only a cover 20 which is capable of fitting onto existing housings of the prior art, that is cable housings already installed into existing room walls. The cover 20 can be screwed onto such a prior art housing or otherwise retro-fitted to prior art housings in the same way that an original cover is intended to fit to the prior art housing. The cover 20 of this embodiment 1 is provided with an orifice, through which the electrician can access cables inside the prior art housing, and the orifice is able to receive an electrical device 403.

The embodiments described also include an electrical device 403 having a part of a snap-fit assembly, the part of a snap-fit assembly being suitable for snap-fitting to a counterpart of the snap-fit assembly on a cover 20. Hence, these electrical devices 403 may be supplied or sold separate and independently and are considered to be within the contemplation of the invention. Such electrical devices 403 may be manufactured by different businesses and yet be dimensioned to a common standard to be able to snap fit to the same orifice on the cover 20.

While there has been described in the foregoing description preferred embodiments of the present invention, it will be understood by those skilled in the technology concerned that many variations or modifications in details of design, construction or operation may be made without departing from the scope of the present invention as defined in the claims.

For example, the snap-fit assembly on the electrical device has been shown in Figure 5A to Figure 5D to have a female part, for receiving a corresponding male part on the cover. However, the skilled man understands that the female part can be placed on the cover and the male part on the electrical device instead.

## Claims

**1.** A wall-mount (1) for an electrical device, comprising: a housing (10) suitable for installation into a wall; a housing (10) having a cover (20); the cover (20) having an orifice suitable for positioning of a removable electrical device; an outer plate (30) which is laid over the cover (20), the outer plate (30) having an orifice; the cover (20) having a guide to align the outer plate (30) such that the orifice of the cover (20) is aligned with the orifice of the outer plate; a gap is provided between the outer plate (30) and the cover (20) into which a part of the electrical device can be inserted to be held by the outer plate (30) and the cover (20), **characterised in that** the cover (20) comprises a part for a snap-fit assembly (18, 21), the part for the snap-fit assembly (18, 21) is interlocked with another part of the snap-fit assembly (18, 21) on the removable of the electrical device.

**2.** A wall-mount for an electrical device, as claimed in claim 1, **characterised in that** the cover (20) is secured to the housing (10) by an interference fit.

**3.** A wall-mount for an electrical device, as claimed in claim 2, wherein the interference fit comprises an eyelet (18) on the one part; and a plug (21) on the other part; the plug (21) being deformable to be pushed into the eyelet (18) to secure to the plug (21) in the eyelet (18).

**4.** A wall-mount for an electrical device, as claimed in claim 1; **characterised in that** the housing (10) is defined by a base and at least one side-wall around the base; the at least one side-wall having at least one portion defined by a weakened edge; the weakened edge being breakable to remove the at least one portion from the side-wall to provide access for a cable to be threaded through the side-wall.

**4.** A wall-mount according to any preceding claim **characterised in that** a cover (20) is provided for covering the housing (10) of the wall-mount.

**5.** A wall-mount according to any preceding claim **characterised in that** an outer plate (30) is provided for assembly with the housing (10) of the wall-mount.

**6.** A wall-mount according to any preceding claim **characterised in that** a part of the snap-fit assembly (18, 21) is suitable for snap-fitting to a counterpart of the snap-fit assembly (18, 21) on the cover (20) of claim 1.

**7.** An electrical device as claimed in claim 7, **characterised in that** a counterpart of the snap-fit assembly (18, 21) is an electrical device selected from the following group: a switch, a power socket and an electrical appliance.
